(19) Europäisches Patentamt
European Patent Office
Office européen des brevets

(11) **EP 4 178 229 A1**

(12) **EUROPEAN PATENT APPLICATION**

(43) Date of publication:
**10.05.2023   Bulletin 2023/19**

(21) Application number: **22200749.4**

(22) Date of filing: **11.10.2022**

(51) International Patent Classification (IPC):
**H04S 7/00** (2006.01)

(52) Cooperative Patent Classification (CPC):
**H04S 7/304**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2021   GB 202115768**

(71) Applicant: **Nokia Technologies Oy
02610 Espoo (FI)**

(72) Inventors:
• **VILERMO, Miikka Tapani
37200 Siuro (FI)**
• **TAMMI, Mikko Tapio
33310 Tampere (FI)**
• **LEHTINIEMI, Arto Juhani
33880 Lempäälä (FI)**

(74) Representative: **Nokia EPO representatives
Nokia Technologies Oy
Karakaari 7
02610 Espoo (FI)**

(54) **SPATIAL AUDIO**

(57)    An apparatus, for enabling adaptive playback, comprising means configured to:
obtain, for a first point of view, a first audio signal for at least a first channel and a second channel;
obtain, for a second point of view, a second audio signal for at least the first channel and the second channel;
determine a single-channel difference audio signal, for the second point of view, based on at least a difference between the first audio signal and the second audio signal,
enable estimation of both the first channel and the second channel of the second audio signal for the second point of view in dependence on the single-channel difference audio signal and the first audio signal.

FIG 3

**Description**

TECHNOLOGICAL FIELD

Embodiments of the present disclosure relate to spatial audio. In particular, some embodiments relate to the transmission of audio signals between a transmitter apparatus and a receiver apparatus.

BACKGROUND

Spatial audio adapts with the changing point of view of a user. For example, for headphone listening, spatial audio can be rotated as a user turns his or her head.

Human beings are very good at detecting sound source directions. Human beings use a changing point of view, for example a head rotation, to improve detection of a sound source direction. For example, a user can rotate his or her head to get the desired sound to a central position where the user's sound source direction detection ability is best. Also head rotation can be used to distinguish between sound sources in front and behind a user. With a left-to-right head rotation sound sources in front move right-to-left whereas sound sources behind move left-to-right.

In existing solutions, point of view data that tracks the user's point of view is transmitted or obtained by a transmitter apparatus which modifies the audio signals to rotate an audio scene according to the point of view data. The transmitter apparatus then low-bit rating encodes the audio signal and sends the coded audio to a receiver apparatus for rendering. In some examples, the receiver apparatus can be headphones. The receiver apparatus decodes the audio and plays it back to the user. These steps can cause delays in rendering the modified audio to the user, in response to a change in point of view of the user. Typically, the delay can be several hundreds of milliseconds. As a consequence, the sound source directions can appear to lag. It would be desirable to reduce the delay.

BRIEF SUMMARY

According to various, but not necessarily all, embodiments there is provided an apparatus, for enabling adaptive playback, comprising means configured to:

obtain, for a first point of view, a first audio signal for at least a first channel and a second channel;
obtain, for a second point of view, a second audio signal for at least the first channel and the second channel;
determine a single-channel difference audio signal, for the second point of view, based on at least a difference between the first audio signal and the second audio signal,
enable estimation of both the first channel and the second channel of the second audio signal for the second point of view in dependence on the single-channel difference audio signal and the first audio signal.

According to some but not necessarily all examples the means configured to determine a single-channel difference audio signal, for the second point of view, based on a difference between the first audio signal and the second audio signal, is configured to determine a difference between a reference channel of the first audio signal and the second audio signal, wherein the reference channel is the first channel, the second channel or a composition channel based on the first channel and the second channel, and wherein the means configured to enable estimation of both the first channel and the second channel of the second audio signal enables estimation in dependence on the single-channel difference audio signal and the reference channel of the first audio signal.

According to some but not necessarily all examples the means configured to determine a single-channel difference audio signal, for the second point of view, is configured to determine a difference between the first audio signal and the second audio signal, in a time domain.

According to some but not necessarily all examples, the apparatus further comprises smoothing means configured to smooth the single-channel difference audio signal in a frequency domain to obtain a smoothed single-channel difference audio signal and to enable estimation of at least the second audio signal in dependence upon the smoothed single-channel difference audio signal and the first audio signal.

According to some but not necessarily all examples the smoothing means is configured to replicate frequency bins within a frequency band, for one or more different frequency bands.

According to some but not necessarily all examples the smoothing means is configured for dynamic smoothing, wherein the dynamic smoothing of the single-channel difference audio signal, based on at least the difference between the first audio signal for the first point of view and the second audio signal for the second point of view, is dependent upon a likelihood of a change in point of view from the first point of view to the second point of view.

According to some but not necessarily all examples the apparatus comprises means configured to:

when the second point of view is offset from the first point of view by a first angle in a positive sense and a third point of view is offset from the first point of view by the first angle in a negative sense, obtaining the single-channel difference audio signal, for the second point of view but not for the third point of view.

According to various, but not necessarily all, embodiments there is provided a method, for enabling adaptive playback, comprising:

obtaining, for a first point of view, a first audio signal for at least a first channel and a second channel;
obtaining, for a second point of view, a second audio signal for at least the first channel and the second channel;
determining a single-channel difference audio signal, for the second point of view, based on at least a difference between the first audio signal and the second audio signal,
enabling estimation of both the first channel and the second channel of the second audio signal for the second point of view in dependence on the single-channel difference audio signal for the second point of view and the first audio signal.

According to various, but not necessarily all, embodiments there is provided an apparatus, for adaptive playback, comprising means configured to:

obtain a single-channel difference audio signal, for a second point of view, dependent on at least a difference between a first audio signal for a first point of view and a second audio signal for a second point of view; and
estimate a first channel and a second channel of the second audio signal for the second point of view in dependence on the single-channel difference audio signal and the first audio signal.

According to some but not necessarily all examples the apparatus comprises means configured to obtain the single-channel difference audio signal, for the second point of view, in the time domain, being dependent on at least a difference, in the time domain, between the first audio signal for the first point of view and the second audio signal for the second point of view; and
estimate a first channel and a second channel of the second audio signal for the second point of view, in the time domain, in dependence on the single-channel difference audio signal, in the time domain, and the first audio signal, in the time domain.

According to some but not necessarily all examples, the apparatus is configured such that, if the second point of view corresponds to a head rotation relative to the first point of view, to estimate the second audio signal at least based on an addition involving the single-channel difference audio signal and one of the first and second channels of the first audio signal and a subtraction involving the single-channel difference audio signal and the other of the point first and second channels of the first audio signal.

According to some but not necessarily all examples, the apparatus is configured such that, if the second point of view corresponds to a head translation relative to the first point of view, to estimate the second audio signal at least based on an addition involving the single-channel difference audio signal and one of the first and second channels of the first audio signal and an addition involving the single-channel difference audio signal and the other of the point first and second channels of the first audio signal or to estimate the second audio signal at least based on a subtraction involving the single-channel difference audio signal and one of the first and second channels of the first audio signal and a subtraction involving the single-channel difference audio signal and the other of the point first and second channels of the first audio signal.

According to some but not necessarily all examples, the apparatus comprises means configured to:
when the second point of view is offset from the first point of view by a first angle in a positive sense and a third point of view is offset from the first point of view by the first angle in a negative sense, re-using an inverse of the single-channel difference audio signal, for the second point of view as a single-channel difference audio signal, for the third point of view.

According to various, but not necessarily all, embodiments there is provided a method comprising:

obtaining a single-channel difference audio signal, for a second point of view, dependent on at least a difference between a first audio signal for a first point of view and a second audio signal for a second point of view; and
estimating a first channel and a second channel of the second audio signal for the second point of view in dependence on the single-channel difference audio signal and the first audio signal.

According to various, but not necessarily all, embodiments there is provided an apparatus, for enabling adaptive playback, comprising means for:

obtaining, for a first point of view, a first audio signal;
obtaining, for a second point of view, a second audio signal;

determining, for the second point of view, at least a difference audio signal based on a difference, between the first audio signal and the second audio signal;

smoothing the difference audio signal in the frequency domain to obtain a smoothed first difference audio signal;

enabling estimation of at least the second audio signal in dependence upon the smoothed difference audio signal and the first audio signal.

According to various, but not necessarily all, embodiments there is provided a method comprising:

obtaining, for a first point of view, a first audio signal;

obtaining, for a second point of view, a second audio signal;

determining, for the second point of view, at least a difference audio signal based on a difference, between the first audio signal and the second audio signal;

smoothing the difference audio signal in the frequency domain to obtain a smoothed first difference audio signal;

enabling estimation of at least the second audio signal in dependence upon the smoothed difference audio signal and the first audio signal.

According to various, but not necessarily all, embodiments there is provided examples as claimed in the appended claims.

BRIEF DESCRIPTION

Some examples will now be described with reference to the accompanying drawings in which:

FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIGs. 9A & 9B show another example of the subject matter described herein;
FIGs. 10A & 10B show another example of the subject matter described herein;
FIG. 11 shows another example of the subject matter described herein;
FIG. 12A shows another example of the subject matter described herein;
FIG. 12B shows another example of the subject matter described herein;
FIG. 13A shows another example of the subject matter described herein;
FIG. 13B shows another example of the subject matter described herein;
FIG. 14 shows another example of the subject matter described herein;
FIG. 15A shows another example of the subject matter described herein;
FIG. 15B shows another example of the subject matter described herein;
FIG. 16 shows another example of the subject matter described herein;
FIG. 17 shows another example of the subject matter described herein;
FIG. 18A shows another example of the subject matter described herein;
FIG. 18B shows another example of the subject matter described herein;
FIG. 19 shows another example of the subject matter described herein.

DETAILED DESCRIPTION

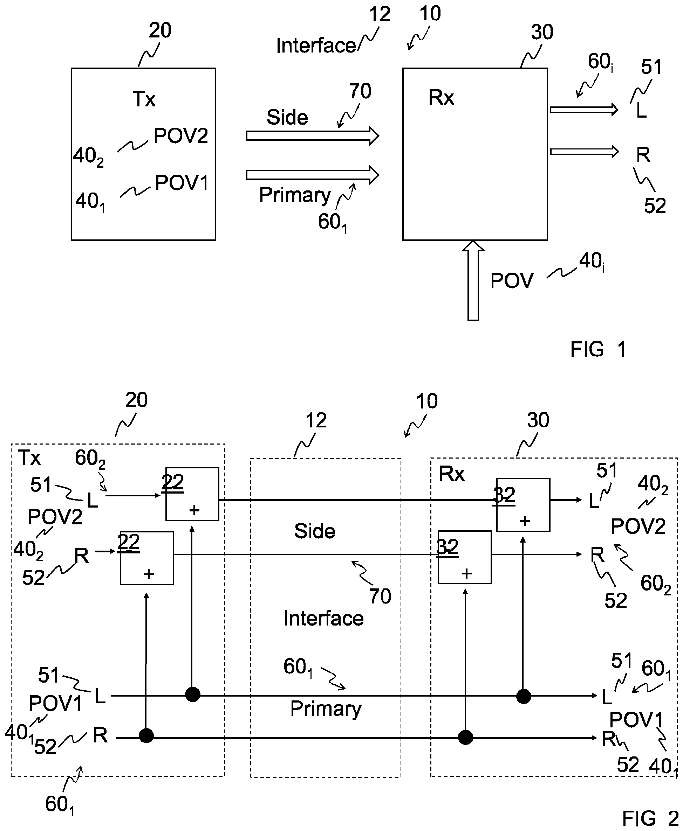

FIG. 1 illustrates an example of a system 10 for playback of audio signals 60. The system 10 comprises a transmitter apparatus 20 that is in communication with a receiver apparatus 30 via an interface 12. In some examples, the interface 12 can be a wireless interface, for example a radio interface.

The transmitter apparatus 20 comprises configured to: obtain, for a first point of view $40_1$, a first audio signal $60_1$; obtain, for a second point of view $40_2$, a second audio signal $60_2$; determine, for the second point of view $40_2$, at least a difference audio signal 70 based on a difference, between the first audio signal $60_1$ and the second audio signal $60_2$; and enable estimation of at least the second audio signal $60_2$ in dependence upon the difference audio signal 70 and the first audio signal $60_1$.

The enablement of the estimation of at least the second audio signal $60_2$ can, for example, be achieved by transmitting the difference audio signal 70 via the interface 12 to the receiver apparatus 30.

The receiver apparatus 30 comprises means configured to:

obtain a difference audio signal 70, for a second point of view $40_2$, dependent on at least a difference between a first audio signal $60_1$ for a first point of view $40_1$ and a second audio signal $60_2$ for a second point of view $40_2$; and estimate the second audio signal $60_2$ for the second point of view $40_2$ in dependence on the difference audio signal 70 and the first audio signal $60_1$.

The difference audio signal 70 can be defined in various different ways.

FIG. 2 illustrates an example of the system 10 illustrated in FIG. 1. In this example, the first audio signal $60_1$ is an audio signal for at least a first channel 51 and a second channel 52 and the second audio signal $60_2$ is an audio signal for at least the first channel 51 and the second channel 52. In this example, but not necessarily all examples, the first channel 51 is a left (L) channel and the second channel 52 is a right (R) channel.

In this example, the transmitter apparatus 20 is configured to enable estimation of both the first channel 51 and the second channel 52 of the second audio signal $60_2$ for the second point of view $40_2$ in dependence on the difference audio signal 70 and the first audio signal $60_1$. Also, the receiver apparatus 30 is configured to estimate a first channel 51 and a second channel 52 of the second audio signal $60_2$ for the second point of view $40_2$ in dependence on the difference audio signal 70 and the first audio signal $60_1$.

In this example, the difference audio signal 70 can have various different forms. For example, let us use the following abbreviations:

| $L_0$ | Left channel of the binaural signal in the delayed user view direction |
|---|---|
| $R_0$ | Right channel of the binaural signal in the delayed user view direction |
| $L_{90}$ | Left channel of the binaural signal 90 degrees left of the delayed user view direction |
| $R_{90}$ | Right channel of the binaural signal 90 degrees left of the delayed user view direction |
| $X_{90}$ | Mono difference signal 70 needed to modify $L_0$ into $L_{90}$ and Ro into $R_{90}$ i.e. side stream for direction 90 degrees. |

Firstly, the number of channels in the signals around delayed user view direction are reduced. As an example, one of the following three formulas may be used:

$$X_{90} = \frac{L_{90} - L_0 + R_0 - R_{90}}{2} \quad \text{(Equation 1 for difference audio signal 70)}$$

$$X_{90} = L_{90} - L_0 \quad \text{(Equation 2 difference audio signal 70)}$$

$$X_{90} = R_0 - R_{90} \quad \text{(Equation 3 difference audio signal 70)}$$

The difference audio signal 70 based on a difference between the first audio signal $60_1$ and the second audio signal $60_2$, can be considered a difference between a reference channel of the first audio signal $60_1$ and the second audio signal $60_2$, wherein the reference channel is the first channel 51, the second channel 52 or composition channel based on the first channel 51 and the second channel 52.

In Equation 1, the reference channel is right minus left. Ro - Lo is the reference channel of the first audio signal and $R_{90}$ - $L_{90}$ is the reference channel of the second audio signal. The difference between the reference channel of the first audio signal and the reference channel of the second audio signal is $X_{90}$.

In Equation 2, the reference channel is the left channel L. Lo is the reference channel of the first signal, $L_{90}$ is the reference channel of the second audio signal and the difference between the reference channel of the first audio signal and the reference channel of the second audio signal is $X_{90}$.

In Equation 3, the reference channel is the right channel R. Ro is the reference channel of the first audio signal and $R_{90}$ is the reference channel of the second audio signal. The differences between the reference channel of the first audio signal and the reference channel of the second audio signal is $X_{90}$.

It will be appreciated from FIG. 2 that the transmitter apparatus 20 creates the channel difference audio signal 70 from the first audio signal $60_1$ and from the second audio signal $60_2$, but then only transmits the first audio signal $60_1$ and the channel difference audio signal 70. It does not transmit the second audio signal $60_2$. The transmitter apparatus 30 then reverses this process and uses the difference audio signal 70 and the first audio signal $60_1$ to recreate or estimate the second audio signal $60_2$. It will therefore be appreciated that the amount of information that is transmitted over the interface 12 is reduced by transmitting the difference audio signal 70 instead of the second audio signal $60_2$.

In the example illustrated in FIG. 2 the difference audio signal 70 is a simple subtraction of the second audio signal $60_2$ from the first audio signal $60_1$. This is performed at the difference means 22. The estimator 32 in the transmitter apparatus 30 then simply adds the first audio signal $60_1$ to the difference audio signal 70 to recover an estimate of the second audio signal $60_2$. In the example of FIG. 2, the differencing 22 and estimation 32 occurs independently for each of the first channel 51 and the second channel 52.

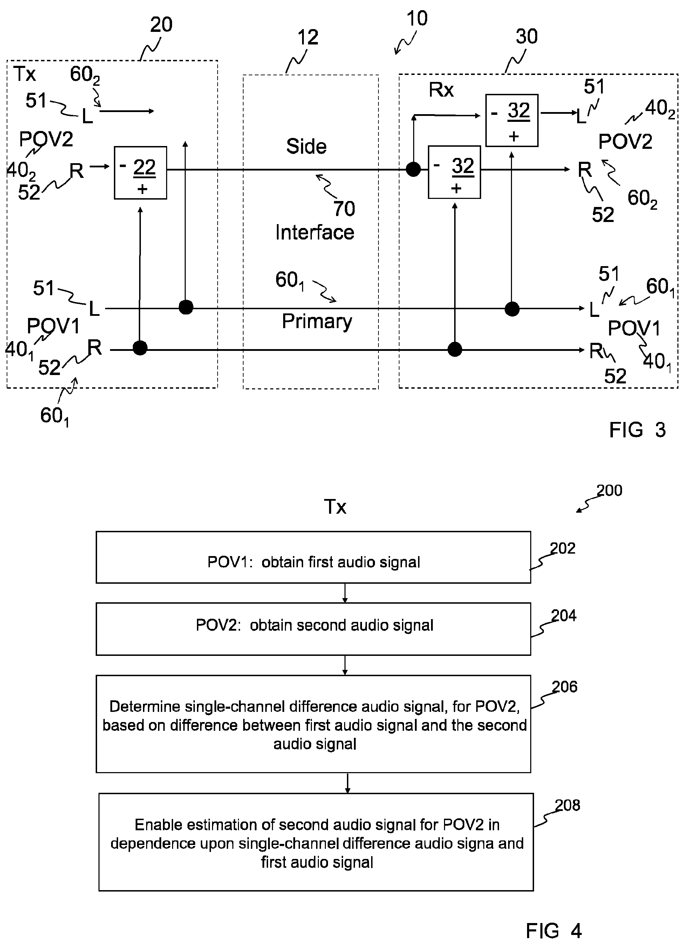

In the example of FIG. 3, below, the system 10 is further refined so that only a single-channel difference audio signal 70 is transmitted from the transmitter apparatus 20 to the receiver apparatus 30. By comparing FIG. 2 and FIG. 3, it can be seen that in FIG. 2 there are two difference audio signals 70 transmitted from the transmitter apparatus 20 to the receiver apparatus 30 for the recreation of the second audio signal $60_2$, that is there is a difference audio signal 70 for each of the channels 51, 52. However, in FIG. 3 there is a single difference audio signal 70 transmitted from the transmitter apparatus 20 to the receiver apparatus 30 for the recreation of the second audio signal $60_2$. That is, there is a single difference audio signal 70 transmitted from the transmitter apparatus 20 to the receiver apparatus 30. This single difference audio signal 70 is for one of the channels and is referred to as a single-channel difference audio signal 70.

The term single-channel difference audio signal 70 can be replaced by:

"single-channel, difference audio signal 70"
"a single channel representation 70 of a difference audio signal" or
"a channel 70 comprising a difference audio signal" or
"a difference audio signal 70, configured to be transmitted in a single channel"

The difference can be based on one or more channels, but the representation of the difference is single channel.

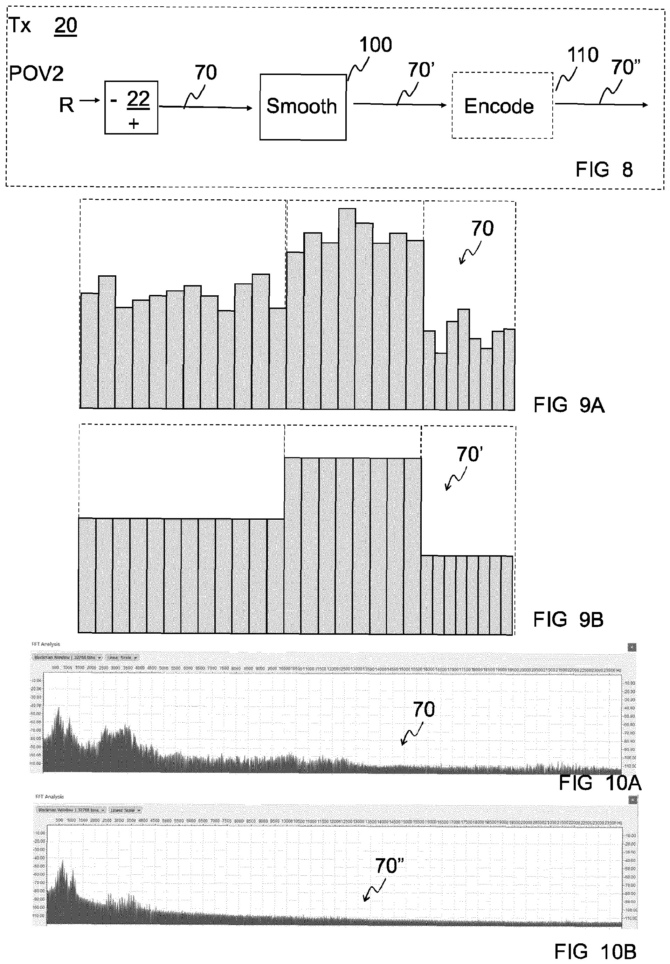

Referring to the example of FIG. 8, the transmitter apparatus 20 can perform smoothing of the difference audio signal 70 in the frequency domain to obtain a smoothed first difference audio signal 70'. This smoothing operation can for example be performed on the examples of FIG. 1, FIG. 2 or FIG. 3.

In the example of FIG. 3, the transmitter apparatus 20 comprises means configured to: obtain, for a first point of view $40_1$, a first audio signal $60_1$ for at least a first channel 51 and a second channel 52;

obtain, for a second point of view $40_2$, a second audio signal $60_2$ for at least the first channel 51 and the second channel 52;
determine a single-channel difference audio signal 70, for the second point of view $40_2$ based on at least a difference between the first audio signal $60_1$ and the second audio signal $60_2$; and
enable estimation of both the first channel 51 and the second channel 52 of the second audio signal 60 for the second point of view $40_2$ in dependence on the single-channel difference audio signal 70 for the second point of view $40_2$ and the first audio signal $60_1$.

The receiver apparatus 30 comprises means configured to:

obtain a single-channel difference audio signal 70, for a second point of view $40_2$, dependent on at least a difference between a first audio signal $60_1$ for a first point of view $40_1$ and a second audio signal $60_2$ for a second point of view $40_2$; and
estimate a first channel 51 and a second channel 52 of the second audio signal $60_2$ for the second point of view $40_2$ in dependence on the single-channel difference audio signal 70 for the second point of view $40_2$ and the first audio signal $60_1$.

In the example illustrated in FIG. 3, the receiver apparatus 30 is configured to estimate the first channel 51 of the second audio signal $60_2$ using at least a first channel 51 of the first audio signal $60_1$ and the single-channel difference audio signal 70 for the second point of view $40_2$ and to estimate the second channel 52 of the second audio signal $60_2$ using at least a second channel 52 of the first audio signal $60_1$ and the same single-channel difference audio signal 70 for the second point of view $40_2$.

As previously described, the difference means 22 used to determine the difference audio signal 70, for example the single-channel difference audio signal 70, for the second point of view $40_2$ based on a difference between the first audio signal $60_1$ and the second audio signal $60_2$, is configured to determine a difference between a reference channel of the first audio signal $60_1$ and the second audio signal $60_2$, wherein the reference channel is the first channel 51, the second channel 52 or composition channel based on the first channel 51 and the second channel 52, and wherein the estimator 32 is configured to enable estimation of both the first channel 51 and the second channel 52 of the second audio channel $60_2$ enables estimation in dependence on the single-channel difference audio signal 70 and the reference channel of the first audio signal $60_1$.

In the example illustrated in FIG. 3, the reference channel is the second channel 52.

In the transmitter apparatus 20, the means configured to determine a single-channel difference audio channel 70, for the second point of view $40_2$, is configured to determine a difference between the first audio signal $60_1$ and the second audio signal $60_2$, in a time domain or in a frequency domain.

The advantage of determining the difference in the time domain is that it provides lower latency. In the example where the time domain difference is used, the receiver apparatus 30 comprises means configured to obtain the single-channel difference audio signal 70, for the second point of view $40_2$, in the time domain, being dependent on at least a difference, in the time domain, between the first audio signal $60_1$ and the first point of view $40_1$ and the second audio signal $60_2$ and the second point of view $40_2$; and

estimate a first channel 51 and a second channel 52 of the second audio signal $60_2$ for the second point of view $40_2$, in the time domain, in dependence on the single-channel difference audio signal 70, in the time domain, and the first audio signal $60_1$, in the time domain.

An advantage of doing the difference in frequency domain is that only a part of the frequencies available can be used. For example, the difference may be calculated for high frequencies whereas for low frequencies the signal for a corresponding point of view is sent as such

FIG. 4 illustrates an example of a method 200 for enabling adaptive playback of audio. The method 200 comprises, at block 202, obtaining, for a first point of view $40_1$, a first audio signal $60_1$ for at least a first channel 51 and a second channel 52. At block 204, the method 200 comprises obtaining, for a second point of view $40_2$, a second audio signal $60_2$ for at least the first channel 51 and the second channel 52. At block 206, the method 200 comprises determining a single-channel difference audio signal 70, for the second point of view $40_2$, based on at least a difference between the first audio signal $60_1$ and the second audio signal $60_2$. At block 208, the method 200 comprises enabling estimation of both the first channel 51 and the second channel 52 of the second audio signal $60_2$ for the second point of view $40_2$ in dependence on the single-channel difference audio signal 70 for the second point of view $40_2$ and the first audio signal $60_1$.

At block 206, the enabling of the estimation can be provided by transmitting the single-channel difference audio signal 70 from the transmitter apparatus 20 to the receiver apparatus 30.

The method 200 can be performed by the transmitter apparatus 20.

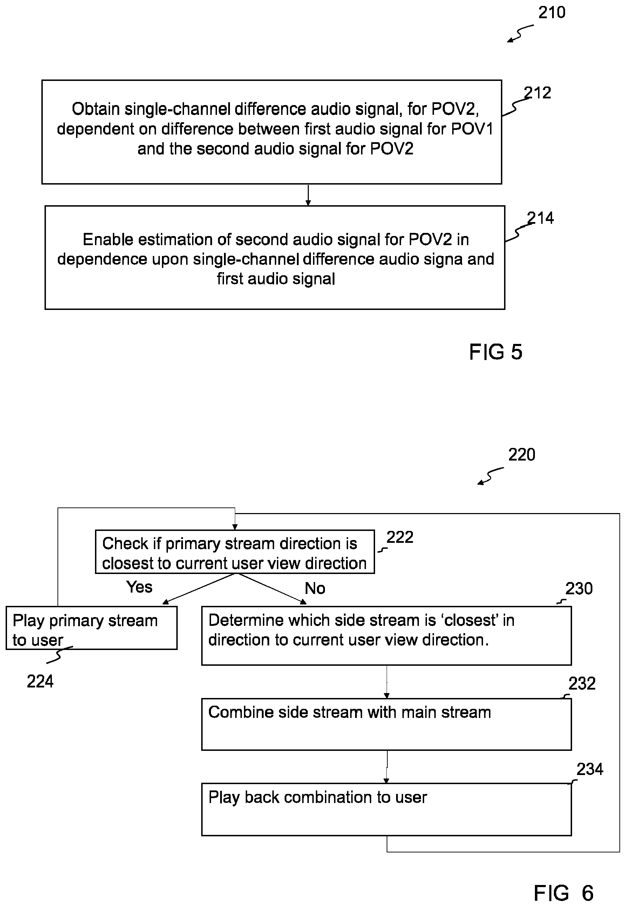

FIG. 5 illustrates an example of a method 210 for adaptive playback of audio. The method 210 comprises, at block 212, obtaining a single-channel difference audio signal 70, for a second point of view $40_2$, dependent on at least a difference between a first audio signal $60_1$ for a first point of view $40_1$ and a second audio signal $60_2$ for a second point of view $40_2$.

At block 214, the method 210 comprises estimating a first channel 51 and a second channel 52 of the second audio signal $60_2$ for the second point of view $40_2$ in dependence on the single-channel difference audio signal 70 and the first audio signal $60_1$. The single-channel difference audio signal 70 can be single-channel difference audio signal 70 for the second point of view $40_2$.

In the preceding examples, a single alternative point of view $40_2$ and a single second audio signal $60_2$ has been described. However, the preceding description can be used with any number of different points of view $40_i$ and corresponding audio signals $60_i$. Thus, although the preceding examples illustrate a primary stream associated with the first point of view $40_1$, and the first audio signal $60_1$ and a single side stream associated with the second point of view $40_2$ and the second audio signal $60_2$, in other examples there may be multiple such side streams each of which is associated with a different point of view $40_i$ and corresponding audio signal $60_i$.

The information that indicates the direction of the primary stream and the side streams may be communicated between the transmitter apparatus 20 and the receiver apparatus 30.

Typically, the side stream directions could be +/- 20°, 40°, 60°, 90°, 120° left (positive) or right (negative) of the primary stream direction. This gives enough directions so that switching between the different streams would not cause audible problems and that the directions are far enough left and right so that even if a user moves his point of view quickly there would typically be a side stream that is near the changed user point of view. For many use cases, such as watching movies or other non-360° content, a smaller number of side streams would typically suffice. For example, only the primary stream and any single 30° side stream could be used.

FIG. 6 illustrates a method 220 for selecting a stream for use. At block 222, the method 220 checks if the primary stream direction is closest to the current user view direction. If it is, the method moves to block 224 and if it not the method moves to block 230. At block 224 the method plays the primary stream (channels of the first audio signal $60_1$) to the user. At block 230, the method 220 determines which side stream is "closest" in direction to the current view direction. At block 232, the method 220 combines the side stream with the primary stream as described in the previous examples. This can for example comprise estimating a first channel 51 and a second channel 52 of a second audio output signal $60_2$ for a second point of view $40_2$ in dependence on the single-channel difference audio signal 70 for the second point of view $40_2$ and the first audio signal $60_1$. Or, more generally, estimating a first channel 51 and a second channel 52 of the ith audio signal $60_i$ for the ith point of view $40_i$ in dependence on the single-channel difference audio signal $70_i$ for the ith point of view $40_i$ and the first audio signal $60_1$. Then, at block 234, the estimated audio signals are rendered to the user.

In some examples the selection of how the primary and side streams are rendered to the user is done after all the streams have been decoded. In this example, all the audio samples are available in the time domain and selection can be done sample by sample. In alternative examples, the selection can be done before decoding and in this way saving processing power because not all streams need to be decoded. However, for this option the delay will be longer (because of the audio decoding delay). This may be reduced by using a lower-latency audio and coder/decoder for the side streams.

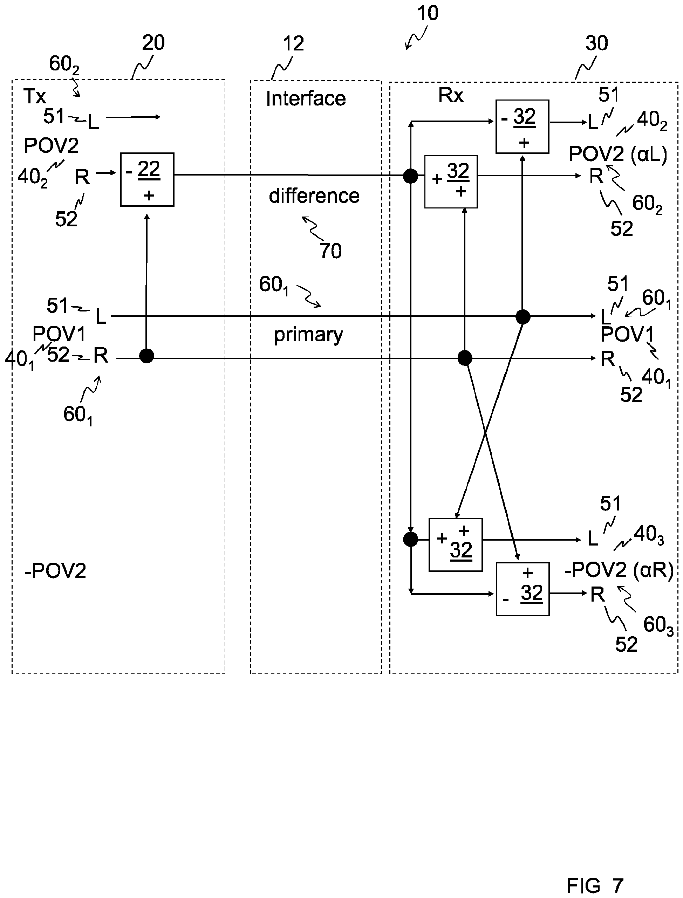

FIG. 7 illustrates a system 10 as previously described that has been further developed to reduce the amount of information transmitted from the transmitter apparatus 20 to the receiver apparatus 30. In this example, a single-channel difference audio signal 70 is used for multiple points of view $40_2$, $40_3$.

In this example, the second point of view $40_2$ is offset from the first point of view $40_1$ by a first angle $+\alpha$ in a positive sense and a third point of view $40_3$ is offset from the first point of view $40_1$ by the first angle in a negative sense (-a). The transmitter apparatus 20 is configured to obtain the single-channel difference audio signal 70, for the second point of view $40_2$ but not for the third point of view $40_3$. The single-channel difference audio signal $70_1$ for the second point of view $40_2$, is transmitted from the transmitter apparatus 20 to the receiver apparatus 30 and can be used to estimate audio signals for both the second point of view $40_2$ and the third point of view $40_3$. The single-channel difference audio signal $70_1$ for the third point of view $40_3$, is not transmitted from the transmitter apparatus 20 to the receiver apparatus 30.

The receiver apparatus 30 uses the single-channel difference audio signal 70, for the second point of view $40_2$, to estimate the second audio signal $60_2$ for the second point of view $40_2$ as previously described. In addition, the receiver apparatus 30 re-uses an inverse of the single-channel difference audio signal 70, for the second point of view $40_2$, as a single-channel difference audio signal 70 for the third point of view $40_3$. The single-channel difference audio signal 70, for the third point of view $40_3$, is then used as previously described to estimate a third audio signal $60_3$ for the third point of view $40_3$ by combining it with the first audio signal $60_1$.

The symmetry between the second point of view $40_2$ and the third point of view $40_3$ allow a single difference signal 70 to be used for the estimation of the audio signals for these different points of view. In FIG. 7, the single-channel difference audio signal 70 is the equivalent of $X_{90} = Ro - R_{90}$, that is $X_\alpha = Ro - R_\alpha$.

At the top of FIG. 7, in relation to the second point of view $40_2$, adaptation is achieved by adding the single-channel difference audio signal 70 for second point of view $40_2$ to the second channel 52 of the primary stream (first audio signal $60_1$) and subtracting the single-channel difference audio signal 70 for the second point of view $40_2$ from the first channel 51 of the primary stream (first audio signal $60_1$). This estimates respectively the second channel 52 of the second audio signal $60_2$ and the first channel 51 of the second audio signal $60_2$.

The single-channel difference audio signal 70 is sent only once for the two different points of view $40_2$, $40_3$ because the symmetry of the problem makes possible using the difference signal 70 and its inverse for directions $\alpha°$ left from the current view direction and $\alpha°$ right from the current view direction.

At the bottom of FIG. 7, in relation to the third point of view $40_3$, the adaptation is achieved by subtracting the single-channel difference audio signal 70 for the second point of view $40_2$ from the second channel 52 of the primary stream (first audio signal $60_1$) and adding the single-channel difference audio signal 70 for the second point of view $40_2$ to the first channel 51 of the primary stream (first audio signal $60_1$). This estimates respectively the second channel 52 of the third audio signal $60_3$ and the first channel 51 of the third audio signal $60_3$.

In this way the number of single-channel difference audio signals 70 transmitted is cut by half by using the same single-channel difference audio signal 70 for two symmetric directions.

Although the above has been described in relation to a single-channel difference audio signal 70 it will be appreciated that this approach can also be used when difference audio signals 70 are used i.e. for multiple channels.

Any of the preceding examples of the transmitter apparatus 20 can be adapted to introduce a smoothing means 100 as illustrated in FIG. 8. In this example, the smoothing means 100 is configured to smooth the difference audio signal 70 in a frequency domain to obtain a smoothed difference audio signal 70' and to enable estimation of at least the second audio signal $60_2$ in dependence upon the smoothed difference audio signal 70' and the first audio signal $60_1$.

The difference audio signal 70 can be a single-channel difference audio signal 70. Then, in this example, the smoothing means 100 is configured to smooth the single-channel difference audio signal 70 in a frequency domain to obtain a smoothed single-channel difference audio signal 70' and to enable estimation of at least the second audio signal $60_2$ in dependence upon the smoothed single-channel difference audio signal 70' and the first audio signal $60_1$.

FIG. 9A illustrates an example of a difference audio signal 70 which can, for example, be a single-channel difference audio signal 70. The signal is illustrated as a spectrum with the x-direction indicating the increasing frequency. The signal is divided into a plurality of different frequency bins. The frequency domain is divided into different frequency ranges as illustrated by the dotted lines and each frequency range includes one or more frequency bins. FIG. 9A illustrates the difference audio signal 70 before smoothing and FIG. 9B illustrates it after smoothing. After smoothing the difference audio signal 70 is referred to as the smoothed difference audio signal 70'. After smoothing the single-channel difference audio signal 70 is referred to as the smoothed single-channel difference audio signal 70'.

In the example illustrated in FIGs 9A and 9B and the equivalent FIGs 10A and 10B, the smoothing means 100 is configured to replicate frequency bins within a frequency band for one or more different frequency bands. This results in each frequency band having one value across all of the frequency bins within that frequency band as illustrated in FIG. 9B.

FIG. 10A is a figure equivalent to FIG. 9A and FIG. 10B is the smoothed equivalent of FIG. 10A. It illustrates a single-channel difference audio signal 70. FIG. 10B illustrates the smoothed version of the single-channel difference audio signal 70 illustrated in FIG. 10A.

In some examples, the smoothing means 100 is configured for dynamic smoothing, The dynamic smoothing of the (single-channel) difference audio signal 70, based on at least the difference between the first audio signal $60_1$ for the first point of view $40_1$ and the second audio signal $60_2$ for the second point of view $40_2$ is dependent upon a likelihood of a change in point of view from the first point of view $40_1$ to the second point of view $40_2$. Thus, different smoothing parameters e.g. bandwidth size and number can be change with a likelihood of a change in point of view. A smoothed (single-channel) difference audio signal 70' for a more likely point of view 40 can have more, smaller bandwidths than a smoothed (single-channel) difference audio signal 70' for a less likely point of view 40.

Thus, in some examples, the transmitter apparatus 30 comprises means configured to:

obtain, for a first point of view $40_1$, a first audio signal $60_1$;
obtain, for a second point of view $40_2$, a second audio signal $60_2$;
determine, for the second point of view $40_2$, at least a difference audio signal 70 based on a difference, between the first audio signal $60_1$ and the second audio signal $60_2$;
smooth the difference audio signal 70 in the frequency domain to obtain a smoothed difference audio signal 70'; and
enable estimation of at least the second audio signal $60_2$ in dependence upon the smoothed difference audio signal 70 and the first audio signal $60_1$.

The transmitter apparatus 30 also performs the equivalent method of obtaining, for a first point of view $40_1$, a first audio signal $60_1$;

obtaining, for a second point of view $40_2$, a second audio signal $60_2$;
determining, for the second point of view $40_2$, at least a difference audio signal 70 based on a difference, between the first audio signal $60_1$ and the second audio signal $60_2$;
smoothing the difference audio signal 70 for the second point of view $40_2$ in the frequency domain to obtain a smoothed difference audio signal 70'; and
enabling estimation of at least a second audio signal $60_2$ in dependence upon the smoothed difference audio signal 70' and the first audio signal $60_1$.

In the example of FIG. 9B, the value that represents all the bins in a frequency band is used to replace all the bins inside that frequency band. This significantly lowers the bit rate required to encode the smoothed difference audio signal 70'.

In some embodiments, the bin values may be smoothed close to the frequency band borders towards the bin values in a neighboring frequency band.

Depending on the time-frequency transform, bins can be real or complex valued.

In some examples, the smoothing means 100 performs an averaging. An average of the bins inside a frequency band can be used to represent all bins inside a frequency band. The average may be a direct average of the complex valued bins where an average of the bin absolute and angle values or one of the bins that is closer to an average value, etc.

However, other approaches to smoothing are possible. For example, any low pass filtering will also be appropriate. The intention is to reduce the variance of the difference audio signal 70 by smoothing.

In some examples, code books or other parametric implementations may be used to represent a value for a frequency band after smoothing.

The selection of the frequency bands can be based on any suitable methodology. For example, they can be third octave bands, block bands, ERB equivalent rectangular bands. In some examples the frequency bands are narrower at low frequencies and wider at higher frequencies.

FIG. 8 illustrates that an encoder 110 is optionally present to encode the smoothed different audio signal 70.

In some examples, the encoder used is an MPEG AAC, MP3, MPEG AAC+, MPEG AAC-LD encoder. Also, speech encoders such as AMR-WB can also be used. Even a mono-coder can be used to encode each channel in a multi-channel audio signal separately.

Multi-channel audio codecs such as MPEG AAC Dolby Digital can also be used too. Several streams may be coded using a single multi-channel audio codec.

Alternatively, a designed for purpose audio encoder can be used to low bit read encode the difference audio signal 70 with the copied bins. This encoder can be designed to take full advantage of the structure of the smoothed difference audio signal 70.

In some examples, the number of side streams and angles selected for them depend on how much the user can rotate his head and/or how good a quality is desired to be achieved. The side streams that are deemed less likely, e.g. the ones furthest away in angle from the delayed user view direction where a user is less likely to turn his head, may be encoded with smaller bit rate than the more likely side streams. Also, the frequency bands used for replicating bins may be wider for the less essential/less well used side streams.

In some examples, the difference audio signal 70 is generated in the time domain and is processed at the receiver apparatus 30 in the time domain. In this example, after the smoothed difference audio signal 70' is determined in the frequency domain, it is converted from the frequency domain into the time domain. The conversion into the time domain can, for example, occur at the transmitter apparatus 20 or at the receiver apparatus 30. In some examples, frequency bin replication can occur within an audio encoder using the time-frequency transform that is used by the encoder.

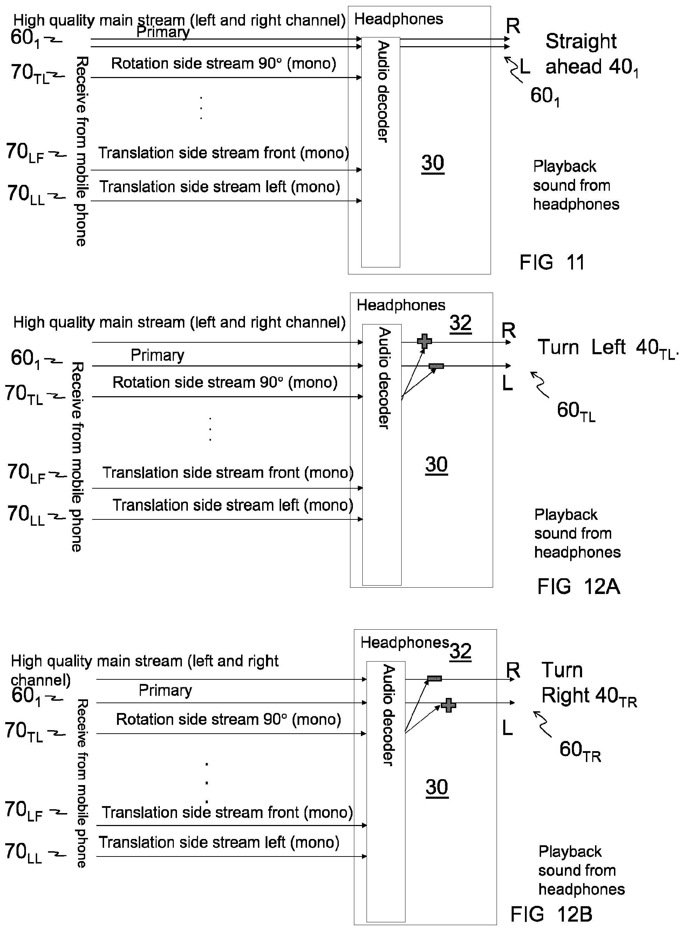

FIGs 11 to 16 illustrate an example of a receiver apparatus 30 that is operating to produce different audio signals 60 for different points of view. In these examples, a point of view is a combination of an angle and/or a movement. An angle can be a two-dimensional angle or a three-dimensional angle. In this particular example the angle is a two-dimensional rotation in the horizontal plane. Also, in this example, the movement is a small movement within the horizontal plane, for example a lean forward, a lean back, a lean left or a lean right.

The receiver apparatus 30 receives the primary stream comprising the first audio signal $60_1$ for both first and second channels R, L. It also receives a number of side streams. A side stream is a single-channel difference audio signal 70 for a particular point of view. It can be used to estimate audio signals 60 for that point of view and its inverse can be used to estimate audio signals 60 for the symmetrically opposite point of view.

For example, the single-channel difference audio signal $70_{TL}$ (for turn left, rotation $\alpha = 90°$), can be used to estimate audio signal $60_{TL}$ for $\alpha$ user rotation (FIG. 12A-turn left [TL], point of view $40_{TL}$) and its inverse can be used to estimate audio signal $60_{TR}$ for -$\alpha$ user rotation (FIG. 12B-turn right [TR], point of view $40_{TR}$).

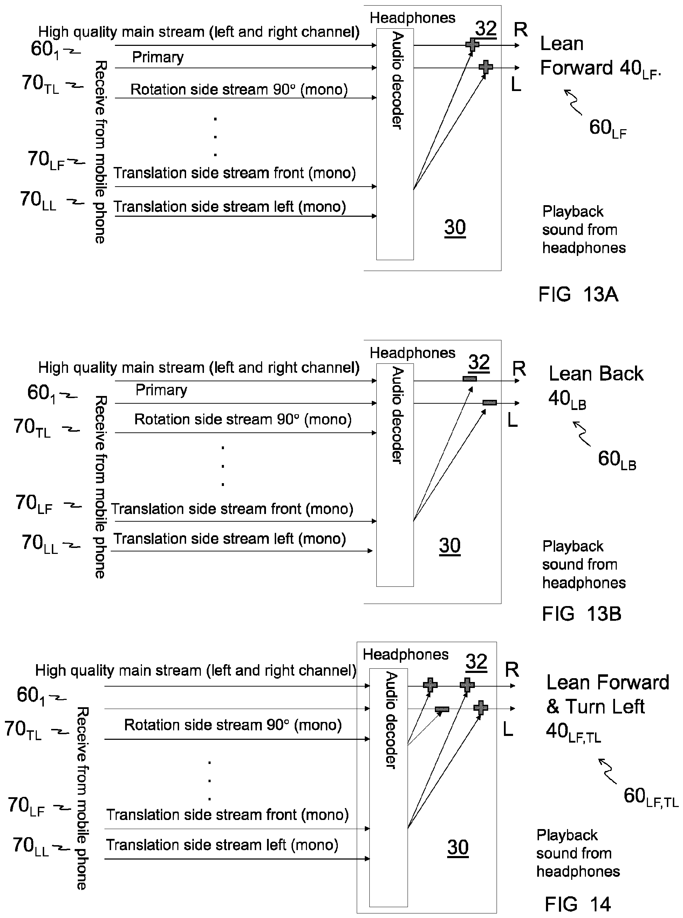

A single-channel difference audio signal $70_{LF}$ (for lean front), can be used to estimate audio signals $60_{LF}$ for a user leaning forward (FIG. 13A- lean forward [LF], point of view $40_{LF}$) and its inverse can be used to estimate audio signal $60_{LB}$ for a user leaning backwards (FIG. 13B-lean back [LB], point of view $40_{LB}$).

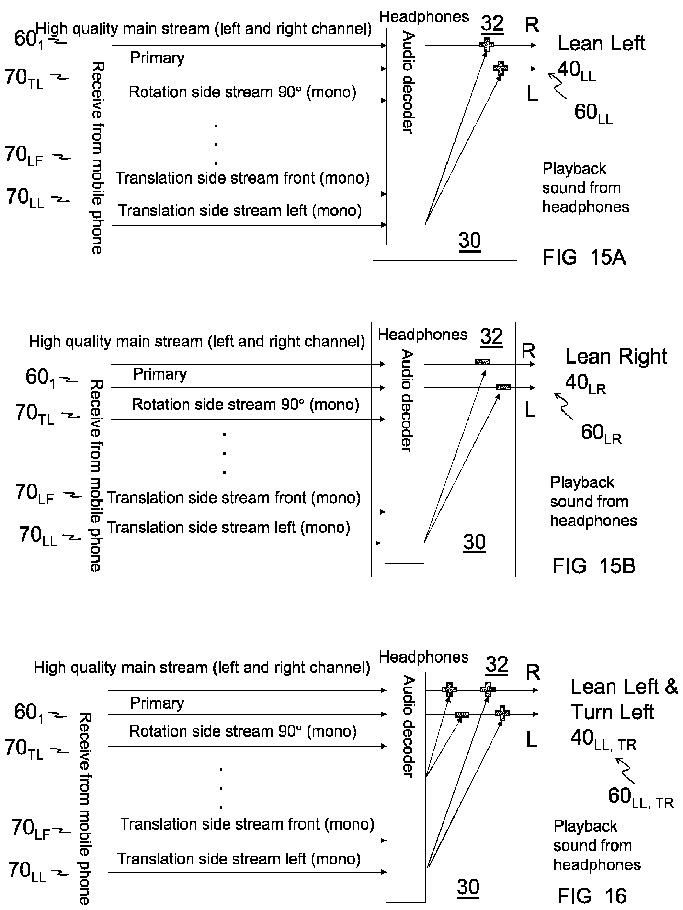

A single-channel difference audio signal $70_{LL}$ (for a lean left) can be used to estimate audio signal $60_{LL}$ for a user leaning left (FIG. 15A- lean left [LL], point of view $40_{LL}$) and its inverse can be used to estimate audio signal $60_{LR}$ for a user leaning right (FIG. 15B- lean right [LR], point of view $40_{LR}$).

It will be noticed from the figures that for rotation the single-channel difference audio signal 70 for a rotation point of view 40 and the first audio signal $60_1$ of the primary stream are combined, in an estimator 32 in opposite senses for the different channels L, R (FIGs 12A, 12B).

It will also be noticed that for lean the single-channel difference audio signal 70 for a lean point of view 40 and the first audio signal $60_1$ of the primary stream are combined, in estimator 32, in the same sense for the different channels L, R (FIGs 13A, 13B; 15A, 15B).

FIG. 11 illustrates the situation when the user is looking straight ahead. The primary stream comprising the first audio signal $60_1$ is rendered to the user in the L, R channels.

FIG. 12A illustrates a situation where the user is turning to the left i.e. point of view $40_{TL}$. The estimator 32 amplifies the right channel R and attenuates the left channel L using the single-channel difference audio signal $70_{TL}$ for this point of view $40_{TL}$. The single-channel difference audio signal $70_{TL}$ for this point of view $40_{TL}$ is added to the right channel R of the first audio signal $60_1$ of the primary stream and subtracted from the left channel L of the first audio signal $60_1$ of the primary stream to estimate the audio signal $60_{TL}$ for the point of view $40_{TL}$.

FIG. 12B illustrates a situation where the user is turning right i.e. point of view $40_{TR}$ which is symmetrically opposite point of view $40_{TL}$. The estimator 32 attenuates the right channel R and amplifies the left channel L using single-channel difference audio signal $70_{TL}$ for the symmetrically opposite point of view $40_{TL}$. The single-channel difference audio signal $70_{TL}$ for the point of view $70_{TL}$ is added to the left channel L of the first audio signal $60_1$ of the primary stream and subtracted from the right channel R of the first audio signal $60_1$ of the primary stream to estimate the audio signal $60_{TR}$ for the point of view $40_{TR}$ (symmetrically opposite the point of view $40_{TL}$).

FIG. 13A illustrates an example where the user is leaning forward i.e. point of view $40_{LF}$. The estimator 32 amplifies both the right channel R and the left channel L using the single-channel difference audio signal $70_{LF}$ for this point of view $40_{LF}$. The single-channel difference audio signal $70_{LF}$ for this point of view $40_{LF}$ is added to the right channel R of the first audio signal $60_1$ of the primary stream and added to the left channel L of the first audio signal $60_1$ of the primary stream to estimate the audio signal $60_{LF}$ for the point of view $40_{LF}$.

FIG. 13B illustrates an example in which the user is leaning backwards i.e. point of view $40_{LB}$ which is symmetrically opposite point of view $40_{LF}$. The estimator 32 attenuates the right channel R and the left channel L using single-channel difference audio signal $70_{LF}$ for the symmetrically opposite point of view $40_{LF}$. The single-channel difference audio signal $70_{LF}$ for the point of view $40_{LF}$ is subtracted from the left channel L of the first audio signal $60_1$ of the primary stream and subtracted from the right channel R of the first audio signal $60_1$ of the primary stream to estimate the audio signal $60_{LB}$ for the point of view $40_{LB}$ (symmetrically opposite the point of view $40_{LF}$).

FIG. 15A illustrates an example where the user is leaning left i.e. point of view $40_{LL}$. The estimator 32 amplifies both the right channel R and the left channel L using the single-channel difference audio signal $70_{LL}$ for this point of view $40_{LL}$. The single-channel difference audio signal $70_{LL}$ for this point of view $40_{LL}$ is added to the right channel R of the first audio signal $60_1$ of the primary stream and added to the left channel L of the first audio signal $60_1$ of the primary stream to estimate the audio signal $60_{LL}$ for the point of view $40_{LL}$.

FIG. 15B illustrates an example in which the user is leaning right i.e. point of view $40_{LR}$ which is symmetrically opposite point of view $40_{LL}$. The estimator 32 attenuates the right channel R and the left channel L using single-channel difference audio signal $70_{LR}$ for the symmetrically opposite point of view $40_{LR}$. The single-channel difference audio signal $70_{LR}$ for the point of view $40_{LR}$ is subtracted from the left channel L of the first audio signal $60_1$ of the primary stream and subtracted from the right channel R of the first audio signal $60_1$ of the primary stream to estimate the audio signal $60_{LR}$ for the point of view $40_{LR}$ (symmetrically opposite the point of view $40_{LL}$).

It is also possible to have different independent combinations of rotation, lean forwards/backwards and lean left/right. For example, it is possible to independently define a rotation as +/- $\alpha$ and/or define a forwards/backwards lean as forwards or backwards and/or define a left/right lean as either left or right.

For example, FIG. 14 illustrates a combination in which there is a lean forward and a turn left. This figure in effect combines FIGS 13A and 12A.

FIG. 16 illustrates a combination in which there is a lean left and a turn left. This figure in effect combines FIGS 15A and 12A.

Other combinations are possible such as a lean forward, lean left and turn left which would combine FIGS 13A, 15A and 12A. It will thus be appreciated that the receiver apparatus 30 is configured to manage head rotation. The receiver apparatus 30 is configured, if the second point of view $40_2$ corresponds to a head rotation relative to the first point of view $40_1$, to estimate the second audio signal $60_2$ at least based on an addition involving the single-channel difference audio signal 70 and one of the first and second channels L, R of the first audio signal $60_1$ and a subtraction involving the single-channel difference audio signal 70 and the other of the first and second channels L, R of the first audio signal $60_1$.

Alternatively, or in addition, the receiver apparatus 30 is configured to manage head translation. The receiver apparatus 30 is configured, if the second point of view $40_2$ corresponds to a head translation relative to the first point of view $40_1$, to estimate the second audio signal $60_2$ at least based on an addition involving the single-channel difference audio signal 70 and one of the first and second channels L, R of the first audio signal $60_1$ and an addition involving the single-channel difference audio signal 70 and the other of the first and second channels L, R of the first audio signal $60_1$ or to estimate the second audio signal $60_2$ at least based on a subtraction involving the single-channel difference audio signal 70 and one of the first and second channels L, R of the first audio signal $60_1$ and a subtraction involving the single-channel difference audio signal 70 and the other of the first and second channels L, R of the first audio signal $60_1$.

In these examples the rotation mono signals (the single-channel difference audio signal 70 for rotation points of view) represent differences between current and future view direction binaural signals and the translation mono signals (single-channel difference audio signal 70 for different leans) represent the difference between current and future head translation binaural signals. When the user rotates his head, the corresponding rotation mono signal 70 is added and subtracted from the current view direction binaural signal left and right channels respectively. When the user translates his head, the corresponding translation mono signal 70 is added to both channels L, R of the current view direction left and right channels $60_1$. The rotation and translation mono signals are independent and are combined (added/subtracted) from the current view direction binaural signal $60_1$ independent of each other.

Typically, there would be more side streams for more points of view, especially orientations, than illustrated. This is indicated by the use of ellipsis "..." .

It is also possible to mix multiple side streams to the primary stream. For example, if future translation is towards the front right and the front right side stream is not available, the apparatus 30 can may mix front and right side streams and add the mix to the primary stream. The amount of how much translation side signal is added may depend on the amount of user head movement.

It is possible to mix side streams in different amounts to get an interpolated version for a direction for which there is no side stream. For example, if a user is looking at direction 30°, and there is no direction 30° side stream available, the device may mix available side streams to create an interpolated version of the 30° direction. For example, a mix of one third of a 10° side stream and two thirds of a 40° side stream can give an approximation of the 30° side stream.

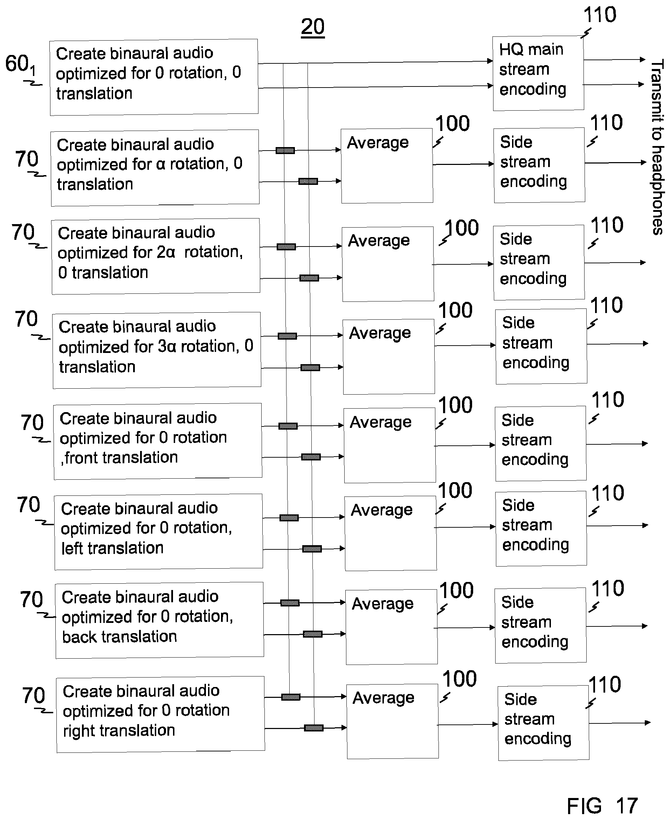

FIG. 17 illustrates an example of a transmitter apparatus 20 configured to produce multiple side streams (multiple single-channel difference audio signals 70 for different points of view).

There are three single-channel difference audio signals 70 for three different rotations $\alpha$, $2\alpha$ and $3\alpha$. There are single-channel difference audio signals 70 for four different translations: front, back, left, right. The respective single-channel difference audio signals 70 are smoothed by respective smoothing means 100 as previously described above before being encoded by respective encoders 110 for transmission to the receiver apparatus 30.

It will be appreciated from the foregoing that this disclosure introduces points of view tracked audio with practically zero latency and significantly smaller bit rate. This can be achieved by transmitting in addition to a current view direction audio (the first audio signal $60_1$) one or more difference audio signals 70 for possible different future points of view, with differences between the current point of view and also, the potential future point of view. Zero latency can be achieved by adding and/or subtracting a difference audio signal 70 from the current view direction audio signal $60_1$ in the time domain.

Low bit rate can be achieved by the difference signal 70 being mono and repetitive in the frequency domain after smoothing 100. With highly efficient codecs it is possible to achieve a bandwidth of less than 150 kb/s for near CD quality for music and less than 64 kb/s for speech.

In some embodiments the difference signal 70 is set only once for two different (symmetric) points of view because of symmetry.

It will therefore be appreciated that the side streams can be modified to be more compatible with low bit rate encoding by reducing the number of channels in the side streams. Also, the side streams can be modified to be more compatible with low bit encoding by replicating frequency bins in the side streams. Also, frequency bin replication can be used more (more bandwidth) in the side streams that are associated with the directions where the user is likely to turn his or her head.

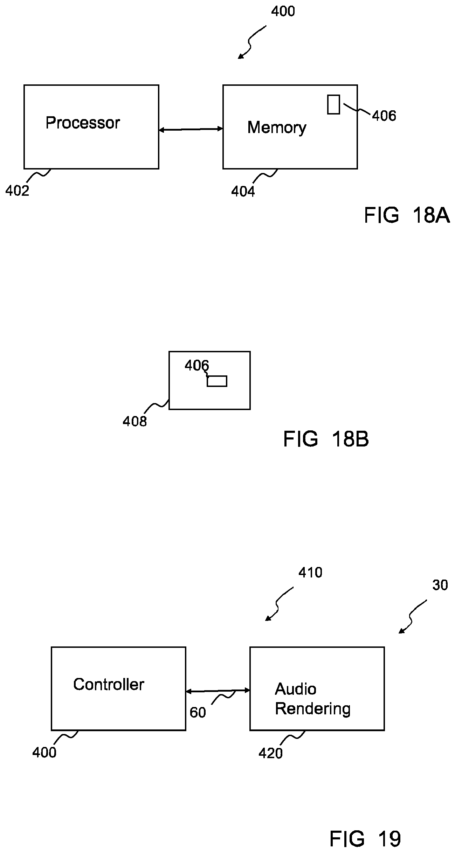

FIG. 18A illustrates an example of a controller 400. Such a controller can be used in the transmitter apparatus 20 and/or in the receiver apparatus 30. Implementation of a controller 400 may be as controller circuitry. The controller 400 may be implemented in hardware alone, have certain aspects in software including firmware alone or can be a combination of hardware and software (including firmware).

As illustrated in FIG. 18A the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 20, 30 when loaded into the processor 402. The computer program instructions, of the computer program 406, provide the logic and routines that enables the apparatus to perform the methods required. The processor 402 by reading the memory 404 is able to load and execute the computer program 406.

The apparatus 20 can therefore comprise:

> at least one processor 402; and
> at least one memory 404 including computer program code
> the at least one memory 404 and the computer program code configured to, with the at least one processor 402, cause the apparatus 20, 30 at least to perform:

> obtaining, for a first point of view, a first audio signal for at least a first channel and a second channel;
> obtaining, for a second point of view, a second audio signal for at least the first channel and the second channel;
> determining a single-channel difference audio signal, for the second point of view, based on at least a difference between the first audio signal and the second audio signal, and enabling estimation of both the first channel and the second channel of the second audio signal for the second point of view in dependence on the single-channel difference audio signal for the second point of view and the first audio signal.

The apparatus 30 can therefore comprise:

> at least one processor 402; and
> at least one memory 404 including computer program code
> the at least one memory 404 and the computer program code configured to, with the at least one processor 402, cause the apparatus 20, 30 at least to perform:

obtaining a single-channel difference audio signal, for a second point of view, dependent on at least a difference between a first audio signal for a first point of view and a second audio signal for a second point of view; and estimating a first channel and a second channel of the second audio signal for the second point of view in dependence on the single-channel difference audio signal and the first audio signal.

The apparatus 20 can therefore comprise:

at least one processor 402; and
at least one memory 404 including computer program code
the at least one memory 404 and the computer program code configured to, with the at least one processor 402, cause the apparatus 20, 30 at least to perform:

obtaining, for a first point of view, a first audio signal;
obtaining, for a second point of view, a second audio signal;
determining, for the second point of view, at least a difference audio signal based on a difference, between the first audio signal and the second audio signal;
smoothing the difference audio signal in the frequency domain to obtain a smoothed first difference audio signal;
enabling estimation of at least the second audio signal in dependence upon the smoothed difference audio signal and the first audio signal.

As illustrated in FIG. 18B, the computer program 406 may arrive at the apparatus 20, 30 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 406. The delivery mechanism may be a signal configured to reliably transfer the computer program 406. The apparatus 20, 30 may propagate or transmit the computer program 406 as a computer data signal.

Computer program instructions for causing an apparatus 20 to perform at least the following or for performing at least the following:

obtaining, for a first point of view, a first audio signal for at least a first channel and a second channel;
obtaining, for a second point of view, a second audio signal for at least the first channel and the second channel;
determining a single-channel difference audio signal, for the second point of view, based on at least a difference between the first audio signal and the second audio signal, and enabling estimation of both the first channel and the second channel of the second audio signal for the second point of view in dependence on the single-channel difference audio signal for the second point of view and the first audio signal.

Computer program instructions for causing an apparatus 30 to perform at least the following or for performing at least the following:

obtaining a single-channel difference audio signal, for a second point of view, dependent on at least a difference between a first audio signal for a first point of view and a second audio signal for a second point of view; and estimating a first channel and a second channel of the second audio signal for the second point of view in dependence on the single-channel difference audio signal and the first audio signal.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

FIG. 19 is an example of a receiver apparatus 30 that is configured for not only producing the audio signals 60 but also for rendering the audio signals 60. The receiver apparatus 30 comprises the controller 400 as previously described and, in addition, comprises audio rendering device 420 for rendering audio based on the audio signals 60. As previously described the audio signals 60 can be varied with the current point of view of the user.

In this example, the receiver apparatus 30 is a headset 410. The headset can for example be a pair of headphones or a set of augmented reality or virtual reality glasses.

In some examples, the headset 410 may communicate via a wireless interface 12 that provides a wireless data connection such as a Bluetooth connection. In some examples, the transmitter apparatus 20 is a mobile phone or similar or other personal electronic device.

The point of view of the user used in the previously described examples can, in some examples, be determined by a point of view of the headset 410. The point of view of the headset 410 can be tracked using sensors in the headset 410. In this case, the headset 410 transmits head tracking information to the transmitter device 20.

In alternative implementations, the point of view of the user can be tracked by tracking the user using sensors at the transmitter device 20 or elsewhere.

Sensors for head tracking may, for example, be an accelerometer built into the headset 410 but it can also be other types like optical, camera, infrared, Bluetooth, LT antenna array, 3D camera, etc. The tracking sensor may reside outside the headset 410. For example, a Microsoft connect-like device may be used to track user head position from outside the headset 410.

The headset 410 has applications such as augmented reality, virtual reality and teleconference applications. The transmitter apparatus 20 can modify audio based on the head tracking information. The transmitter apparatus 20 sends the modified audio to the headset 410 and the headset further modifies/selects what audio is played to the user. The head tracking info is delayed when it reaches the transmitter device 20 compared to actual current user view direction (because of transmission delay). The transmitter apparatus 20 uses the delayed head tracking info to create the different audio streams. One high quality stereo audio stream (the first audio signal $60_1$) is optimized for the user delayed view direction. This is the primary stream. Other side streams (other different audio signals 70 for different points of view 40) are of lower quality and can be used to modify the primary stream so that the primary stream becomes optimized for other points of view one of which is typically close to the current user view direction. The headset 410 modifies the primary stream constantly in this way based on current head tracking info.

As previously described, the modification is done (for rotation) by adding the side stream that is associated with the current user view direction to the left channel of the primary stream and subtracting the side stream from the right channel of the primary stream.

The used audio signal 60 may be stereo, binaural, 5.1 and Ambisonics, etc with Ambisonics or 5.1 that have more than two channels, it may not be possible to reduce the different signals into a mono signal. Instead, some of the channels in the 5.1 or Ambisonics may be grouped into stereo pairs and a different signal is used for each pair.

Ordinarily the side stream points of view 40 would be fixed, for example typical choices for the orientations might be +/- 20°, +/- 40°, +/- 60°, +/- 90°, +/- 120° because these are close to the likely directions where the user can turn his head. However, in some cases there may be other reasons for selecting these directions. The selection may be done in the mobile phone or the headset 410. Either of the devices may determine a more likely direction. If the determination is done in the headset 410, then the determined directions need to be transmitted to the mobile phone 20 so that it can be used in the determined directions including the side streams 70.

Either of the apparatus 20, 30 may determine sound source directions either in the audio signal that is transmitted from the mobile phone 20 to the headset 30 or in the real-world sound environment. For real world sound sources, a device needs at least two (typically three or four) microphones to detect sound source directions. Sound source directions can be detected using methods such as beamforming or time difference. Sound source directions such as speaker in a teleconference or another real-world person (than the user) are likely directions when a user may turn his head. These directions can be used to create more likely side stream directions and these directions can be used to create more likely side streams. The more likely side streams may be encoded with a higher bit rate than other side streams.

The blocks illustrated in the FIGs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus, for enabling adaptive playback, comprising means configured to:

   obtain, for a first point of view, a first audio signal for at least a first channel and a second channel;
   obtain, for a second point of view, a second audio signal for at least the first channel and the second channel;
   determine a single-channel difference audio signal, for the second point of view, based on at least a difference between the first audio signal and the second audio signal; and
   enable estimation of the first channel and the second channel of the second audio signal for the second point of view is dependent on the single-channel difference audio signal and the first audio signal.

2. An apparatus as claimed in claim 1,
   wherein the means configured to determine the single-channel difference audio signal causes the apparatus to determine a difference between a reference channel of the first audio signal and the second audio signal, wherein the reference channel is the first channel, the second channel or a composition channel based on the first channel and the second channel,

3. An apparatus as claimed in claim 2, wherein the means configured to enable estimation of the first channel and the second channel of the second audio signal is dependent on the single-channel difference audio signal and the reference channel of the first audio signal.

4. An apparatus as claimed in any of claims 1 to 3, wherein the means configured to determine the single-channel difference audio signal causes the apparatus to determine a difference between the first audio signal and the second audio signal, in a time domain.

5. An apparatus as claimed in any preceding claim, further comprising means configured to smooth the single-channel difference audio signal to obtain a smoothed single-channel difference audio signal and enable estimation of at least the second audio signal in dependence upon the smoothed single-channel difference audio signal and the first audio signal.

6. An apparatus as claimed in claim 5, wherein the means configured to smooth the single-channel difference audio signal in a frequency domain.

7. An apparatus as claimed in claim 6, wherein the smoothing means is configured to replicate frequency bins within a frequency band, for one or more different frequency bands.

8. An apparatus as claimed in any of claims 5 to 7, wherein the smoothing means is configured for dynamic smoothing, wherein the dynamic smoothing of the single-channel difference audio signal, based on at least the difference between the first audio signal for the first point of view and the second audio signal for the second point of view, is dependent upon a likelihood of a change in point of view from the first point of view to the second point of view.

9. An apparatus as claimed in claim 8, wherein the dynamic smoothing of the single-channel difference audio signal, based on at least the difference between the first audio signal for the first point of view and the second audio signal for the second point of view, is dependent upon a likelihood of a change in point of view from the first point of view to the second point of view.

10. An apparatus as claimed in any preceding claim, comprising means configured to:

when the second point of view is offset from the first point of view by a first angle in a positive sense and a third point of view is offset from the first point of view by the first angle in a negative sense, obtain the single-channel difference audio signal, for the second point of view but not for the third point of view.

11. A method, for enabling adaptive playback, comprising:

obtaining, for a first point of view, a first audio signal for at least a first channel and a second channel;
obtaining, for a second point of view, a second audio signal for at least the first channel and the second channel;
determining a single-channel difference audio signal, for the second point of view, based on at least a difference between the first audio signal and the second audio signal; and
enabling estimation of the first channel and the second channel of the second audio signal for the second point of view in dependence on the single-channel difference audio signal for the second point of view and the first audio signal.

12. A method as claimed in claim 11, wherein determining the single-channel difference audio signal comprises determining a difference between a reference channel of the first audio signal and the second audio signal, wherein the reference channel is the first channel, the second channel or a composition channel based on the first channel and the second channel, and wherein enabling estimation of the first channel and the second channel of the second audio signal is in dependence on the single-channel difference audio signal and the reference channel of the first audio signal.

13. A method as claimed in claim 11, further comprising smoothing the single-channel difference audio signal to obtain a smoothed single-channel difference audio signal and enabling estimation of at least the second audio signal in dependence upon the smoothed single-channel difference audio signal and the first audio signal.

14. A method as claimed in claim 13, wherein smoothing comprises dynamic smoothing, wherein the dynamic smoothing of the single-channel difference audio signal, based on at least the difference between the first audio signal for the first point of view and the second audio signal for the second point of view, is dependent upon a likelihood of a change in point of view from the first point of view to the second point of view.

15. A method as claimed in claim 11, further comprises:
when the second point of view is offset from the first point of view by a first angle in a positive sense and a third point of view is offset from the first point of view by the first angle in a negative sense, obtaining the single-channel difference audio signal, for the second point of view but not for the third point of view.

20

Tx

POV2 ~ $40_2$

POV1 ~ $40_1$

Interface ~ 12    10

30    $60_i$    51

Rx

70

Side

Primary ~ $60_1$

L

R

52

POV ~ $40_i$

FIG 1

20

Tx    $60_2$

51 ~ L

POV2

$40_2$    R

52

22    +

22    +

10

12

30

Rx

Side

Interface

70

$60_1$

32    +

32    +

L ~ $40_2$

POV2

R ~ $60_2$

52

51

POV1

$40_1$ 52 ~ R    L

Primary

51 $60_1$

L ~ $60_1$

POV1

R ~ 52 $40_i$

$60_1$

FIG 2

FIG 3

FIG 4

210

Obtain single-channel difference audio signal, for POV2,
dependent on difference between first audio signal for POV1
and the second audio signal for POV2

212

Enable estimation of second audio signal for POV2 in
dependence upon single-channel difference audio signa and
first audio signal

214

## FIG 5

220

Check if primary stream direction is
closest to current user view direction

222

Yes          No          230

Play primary stream
to user

224

Determine which side stream is 'closest' in
direction to current user view direction.

Combine side stream with main stream

232

Play back combination to user

234

## FIG 6

FIG 7

Tx __20__

POV2

R → | - __22__ + | →⟍ 70 → | Smooth |⟍ 100 →⟍ 70' → | Encode |⟍ 110 →⟍ 70"

FIG 8

FIG 9A

FIG 9B

FIG 10A

FIG 10B

High quality main stream (left and right channel)

$60_1$

Primary

$70_{TL}$

Rotation side stream 90° (mono)

Receive from mobile phone

$70_{LF}$

Translation side stream front (mono)

$70_{LL}$

Translation side stream left (mono)

Headphones

Audio decoder

30

R

Straight ahead $40_1$

L

$60_1$

Playback sound from headphones

FIG 11

High quality main stream (left and right channel)

$60_1$

Primary

$70_{TL}$

Rotation side stream 90° (mono)

Receive from mobile phone

$70_{LF}$

Translation side stream front (mono)

$70_{LL}$

Translation side stream left (mono)

Headphones 32

Audio decoder

30

R

Turn Left $40_{TL}$.

L

$60_{TL}$

Playback sound from headphones

FIG 12A

High quality main stream (left and right channel)

$60_1$

Primary

$70_{TL}$

Rotation side stream 90° (mono)

Receive from mobile phone

$70_{LF}$

Translation side stream front (mono)

$70_{LL}$

Translation side stream left (mono)

Headphones 32

Audio decoder

30

R

Turn Right $40_{TR}$

L

$60_{TR}$

Playback sound from headphones

FIG 12B

High quality main stream (left and right channel)

$60_1$

$70_{TL}$

$70_{LF}$

$70_{LL}$

Receive from mobile phone

Primary

Rotation side stream 90° (mono)

.
.
.

Translation side stream front (mono)

Translation side stream left (mono)

Headphones

Audio decoder

$32$

$30$

R

L

Lean
Forward $40_{LF}$.

$60_{LF}$

Playback
sound from
headphones

FIG 13A

High quality main stream (left and right channel)

$60_1$

$70_{TL}$

$70_{LF}$

$70_{LL}$

Receive from mobile phone

Primary

Rotation side stream 90° (mono)

.
.
.

Translation side stream front (mono)

Translation side stream left (mono)

Headphones

Audio decoder

$32$

$30$

R

L

Lean Back
$40_{LB}$

$60_{LB}$

Playback
sound from
headphones

FIG 13B

High quality main stream (left and right channel)

$60_1$

$70_{TL}$

$70_{LF}$

$70_{LL}$

Receive from mobile phone

Rotation side stream 90° (mono)

.
.
.

Translation side stream front (mono)

Translation side stream left (mono)

Headphones

Audio decoder

$32$

$30$

R

L

Lean Forward
& Turn Left
$40_{LF,TL}$

$60_{LF,TL}$

Playback
sound from
headphones

FIG 14

$60_1$ High quality main stream (left and right channel)

$70_{TL}$ Primary

Receive from mobile phone

Rotation side stream 90° (mono)

$70_{LF}$

$70_{LL}$ Translation side stream front (mono)

Translation side stream left (mono)

Headphones $\underline{32}$

Audio decoder

$\underline{30}$

R

Lean Left

$40_{LL}$

L

$60_{LL}$

Playback sound from headphones

FIG 15A

High quality main stream (left and right channel)

$60_1$ Primary

$70_{TL}$

Receive from mobile phone

Rotation side stream 90° (mono)

$70_{LF}$ Translation side stream front (mono)

$70_{LL}$ Translation side stream left (mono)

Headphones $\underline{32}$

Audio decoder

$\underline{30}$

R

Lean Right

$40_{LR}$

L

$60_{LR}$

Playback sound from headphones

FIG 15B

High quality main stream (left and right channel)

$60_1$ Primary

$70_{TL}$

Receive from mobile phone

Rotation side stream 90° (mono)

$70_{LF}$ Translation side stream front (mono)

$70_{LL}$ Translation side stream left (mono)

Headphones $\underline{32}$

Audio decoder

$\underline{30}$

R

Lean Left & Turn Left

$40_{LL, TR}$

L

$60_{LL, TR}$

Playback sound from headphones

FIG 16

$60_1$ | Create binaural audio optimized for 0 rotation, 0 translation

_20_

110 | HQ main stream encoding

Transmit to headphones

70 | Create binaural audio optimized for α rotation, 0 translation

100 | Average

110 | Side stream encoding

70 | Create binaural audio optimized for 2α rotation, 0 translation

100 | Average

110 | Side stream encoding

70 | Create binaural audio optimized for 3α rotation, 0 translation

100 | Average

110 | Side stream encoding

70 | Create binaural audio optimized for 0 rotation ,front translation

100 | Average

110 | Side stream encoding

70 | Create binaural audio optimized for 0 rotation, left translation

100 | Average

110 | Side stream encoding

70 | Create binaural audio optimized for 0 rotation, back translation

100 | Average

110 | Side stream encoding

70 | Create binaural audio optimized for 0 rotation right translation

100 | Average

110 | Side stream encoding

FIG 17

400

Processor ⟷ Memory 406

402 404

FIG 18A

406
408

FIG 18B

410 30

Controller ⟷ Audio Rendering
60
400 420

FIG 19

Europäisches
Patentamt

European
Patent Office

Office européen
des brevets

# EUROPEAN SEARCH REPORT

**Application Number**

EP 22 20 0749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/067445 A1 (ZERMATT TECH LLC [US]) 4 April 2019 (2019-04-04) * paragraph [0003] * * paragraph [0028] * * paragraph [0044] – paragraph [0049] * * claims 1-6 * * figures 1A-2C * | 1-15 | INV. H04S7/00 |
| A | US 2017/045941 A1 (TOKUBO TODD [US] ET AL) 16 February 2017 (2017-02-16) * paragraph [0133] – paragraph [0136] * * figure 10 * | 1-15 | |

**TECHNICAL FIELDS SEARCHED (IPC)**

H04S

The present search report has been drawn up for all claims

| Place of search | Date of completion of the search | Examiner |
|---|---|---|
| Munich | 20 March 2023 | Meiser, Jürgen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 0749

20-03-2023

| Patent document cited in search report | | Publication date | Patent family member(s) | | Publication date |
|---|---|---|---|---|---|
| WO 2019067445 | A1 | 04-04-2019 | CN | 111194561 A | 22-05-2020 |
| | | | US | 2020236489 A1 | 23-07-2020 |
| | | | WO | 2019067445 A1 | 04-04-2019 |
| US 2017045941 | A1 | 16-02-2017 | US | 2017045941 A1 | 16-02-2017 |
| | | | US | 2020264701 A1 | 20-08-2020 |
| | | | US | 2022197380 A1 | 23-06-2022 |

EPO FORM P0459